Europäisches Patentamt

European Patent Office

Office européen des brevets

(19)

(11) Veröffentlichungsnummer: **0 167 649**

**A1**

(12) **EUROPÄISCHE PATENTANMELDUNG**

(21) Anmeldenummer: **84108126.8**

(22) Anmeldetag: **11.07.84**

(51) Int. Cl.4: **C 04 B 35/18**

(43) Veröffentlichungstag der Anmeldung:
**15.01.86 Patentblatt 86/3**

(84) Benannte Vertragsstaaten:
**AT BE CH DE FR GB IT LI LU NL SE**

(71) Anmelder: **Hutschenreuther AG**

**D-8672 Selb(DE)**

(72) Erfinder: **Teuchert, Karl**
**Rehauer Strasse 39**
**D-8671 Schönwald(DE)**

(72) Erfinder: **Hahn, Christoph, Dr.**
**Bei der Linde 20**
**D-8672 Selb(DE)**

(74) Vertreter: **Patentanwälte Czowalla . Matschkur –**
**Partner**
**Dr.-Kurt-Schumacher-Strasse 23 Postfach 9109**
**D-8500 Nürnberg 11(DE)**

(54) **Polykristallines, keramisches Material aus Cordierit.**

(57) Die Erfindung bezieht sich auf ein Polykristallines, keramisches Material niedriger Wärmedehnung, hoher Festigkeit und hoher Thermoschockbeständigkeit aus Cordierit, wobei das Material keimbildende und damit auf Glasphase rekristallisierend wirkende Zusätze von Nioboxid und oder Tantaloxid auf-weist.

0167649

## Polykristallines, keramisches Material aus Cordierit

Die Erfindung betrifft ein polykristallines, keramisches Material niedriger Wärmedehnung, hoher Festigkeit und hoher Thermoschockbeständigkeit aus Cordierit.

Keramische Materialien auf Cordieritbasis sind zum Beispiel aus DIN 40 685/1 Gruppen 400 und 500, PS 22 22 468, AS 24 33 438 und AS 24 50 071 bekannt.

In DIN 40 685/1 sind cordierithaltige Materialien in den Gruppen 400 und 500 charakterisiert mit Längenausdehnungskoeffizienten von $2 - 3 \times 10^{-6}$ $1/^{\circ}C$ im Bereich von 20 - 1000 $^{\circ}C$ (Typ KER 410) von $2,5 - 5 \times 10^{-6}$ $1/^{\circ}C$ im Temperaturbereich von 20 - 1000 $^{\circ}C$ (Typ KER 520). Diese Materialien finden vorwiegend wegen ihrer Temperaturwechselbeständigkeit als thermische Isolierstoffe im weitesten Sinne Anwendung.

In PS 22 22 468 findet ein Katalysatorträger in Wabenart aus Cordierit Erwähnung. Aus AS 24 33 438 sind extrudierte Formkörper aus Cordieritpulver bekannt geworden. In AS 24 50 071 schließlich wird Schutz genommen für polykristalline, gesinterte Keramik bestimmter Zusammensetzung und niedriger Wärmedehnung in mindestens einer Richtung und Cordierit als Hauptkristallphase. Ein Wärmedehnungsverhalten von weniger als $1,1 \times 10^{-6}$ $1/^{\circ}C$ im Bereich 20 - 1000 $^{\circ}C$ soll dadurch erzielt werden, daß einerseits bestimmte Zusammensetzungen eingehalten und andererseits durch Ausrichtung bestimmter, plättchenförmiger Bestandteile eine Orientierung der entstehenden Cordieritkristalle in Richtung der geringsten Wärmedehnung erreicht wird. Dieser Fall trifft dann zu, wenn die Masse extrudiert wird und plättchenförmige Kristalle aus Talk und Kaolinit in Extrusionsrichtung ausgerichtet werden. Dies führt aber infolge einer Orientierung der Cordieritkristalle zu einem Material von anisotroper Wärmedehnung. Dies bewirkt als Folge der anisotropen, thermischen Dehnung im polykristallinen Material bei Beanspruchung auf Temperaturwechsel erhöhte Spannungen, welche zu einer Verminderung der Temperaturwechselbeständigkeit führen. Ursache dafür ist die Wärmedehnungsanisotropie des Cordieritkristalls in den verschiedenen Richtungen seiner Kristallachsen.

Das in A... ... :O 071 beanspruchte Material weist zwar durch Orientierung von Cordieritkristallen in Extrusionsrichtung eine niedrige Wärmedehnung auf, woraus allerdings auch eine anisotrope Wärmedehnung in Richtung der beiden anderen Kristallachsen resultiert, was letztlich das genannte Material nicht als besonders temperaturwechselbeständig erscheinen läßt.

Aus der keramischen Fachliteratur schließlich gibt es verschiedene Hinweise auf keramische Cordieritkörper für Anwendungen, wo niedrige Wärmedehnung und gute Thermoschockbeständigkeit offenbart werden. So befassen sich beispielsweise Rasch u. a. (1964) mit Cordieritbildung und -werkstoffeigenschaften. Sie geben den linearen Wärmedehnungskoeffizienten im Bereich 20 - 600 $^{o}$C mit 2,0 x $10^{-6}$ 1/$^{o}$C an. Beals u. a. (1952) geben den bei Cordieritmaterialien niedrigst erzielbaren Wärmedehnungskoeffizienten im Bereich 20 - 300 $^{o}$C mit 1,0 x $10^{-6}$ 1/$^{o}$C an. Lamar u. a. (1949) berichten über Wärmedehnungen von 20 - 600 $^{o}$C bei Cordieritmaterialien von etwa 1,0 x $10^{-6}$ 1/$^{o}$C. Aus vorgenannten Literaturstellen ist abzuleiten, daß bei polykristallinen Cordieritmaterialien mit Wärmedehnungskoeffizienten von wenigstens 1,5 - 2,0 x $10^{-6}$ 1/$^{o}$C im Bereich von 20 - 1000 $^{o}$C zu rechnen ist.

Cordieritkeramisches Material wird auf dem Wege der Sinterung meist aus Tonen/Kaolinen und/oder andere Tonerdeträgern und Speckstein und/oder anderen Magnesiumträgern hergestellt. Entsprechend der Zusammensetzung im Dreistoffsystem $MgO-Al_2O_3-SiO_2$ ist bei der Sinterung mit dem Auftreten glasiger Schmelzphasen nicht erst bei Temperaturen um 1345 $^{o}$C zu rechnen, sondern weit unterhalb. Rohstoffbedingte, glasbildende Verunreinigungen wie Eisen, Alkalien und andere Erdalkalien erniedrigen die Temperatur der Glasphasenbildung auf < 1100 $^{o}$C und erhöhen auch deren Menge im Sinterkörper beträchtlich. Die Glasphase ist maßgeblich an der Sinterung bis zum Ende der Cordieritbildung beteiligt. Cordieritwerkstoffe sind typische Beispiele für Materialien mit Flüssigphasensinterung. Die flüssige Glasphase fördert die Cordieritbildung und bewirkt letztlich den Verbund der Cordieritkristalle (Ber.Dt.Keram.Ges. 52, (1975), 361-363). Ab 1300 $^{o}$C

liegt nach einer komplexen Phasenfolge aus den schon genannten Rohstoffen als kristalline Phase Cordierit in einer glasigen Grundmasse vor.

Die Erfindung hat sich zur Aufgabe gestellt, an sich bekannte Zusammensetzungen für polykristallines, keramisches Cordieritmaterial so zu verbessern, daß eine niedrigstmögliche Wärmedehnung bei hoher Festigkeit sowie niedrigem E-Modul und zugleich die höchste Thermoschockbeständigkeit erreicht wird. Dieses Ziel ergibt sich erfindungsgemäß dadurch, daß das Ausgangsmaterial keimbildende und damit auf Glasphase rekristallisierend wirkende Zusätze von Nioboxid und/oder Tantaloxid aufweist.

Die keimbildende und damit rekristallisierende Wirkung dieser Zusätze auf die in beträchtlicher Menge in dem Ausgangsmaterial vorhandene Alkali-Erdalkali-Aluminiumsilikatglasphase, die sich beim Sintern bildet und in der Abkühlung oder bei isothermem Tempern zu Cordierit rekristallisieren läßt, führen überraschenderweise die Wärmedehnungswerte von polykristallinem, nicht orientiertem Cordierit auf ein außerordentlich niedriges Niveau. Die Rekristallisation läßt die Glasphase, deren Wärmedehnung von 20 - 600 $^\circ$C bei Werten von mehr als 4 - 5 x $10^{-6}$ 1/$^\circ$C liegt, zu Cordierit ohne Vorzugsrichtung entglasen. Zugleich sinkt die Wärmedehnung des entglasten Materials auf einen extrem niedrigen Wert für polykristallines Cordierit. Die Wärmedehnung eines solchen Werkstoffes liegt im Bereich von 20 - 1000 $^\circ$C bei Werten von höchstens 1 x $10^{-6}$ 1/$^\circ$C. Der Cordieritanteil im Scherben und der Wärmedehnungskoeffizient korrespondieren miteinander in der Weise, daß einem höheren Cordieritanteil ein um so niedriger Wärmedehnungskoeffizient entspricht. Das erfindungsgemäße Material weist deshalb einen Cordieritphasenanteil von bis zu 99 % auf.

Es liegt im Rahmen der Erfindung, die Maßnahme so zu treffen, daß das Material Zusätze von 0,1 - 15 Massenanteilen in % an Nioboxid und/oder Tantaloxid aufweist.

- 4 -

Es hat sich als besonders vorteilhaft erwiesen Material zu verwenden, das eine isotherme Temperung bei 800 - 1300 $^{\circ}$C und eine dadurch bewirkte vollständige Rekristallisation von Cordierit aus der Glasphase erfahren hat.

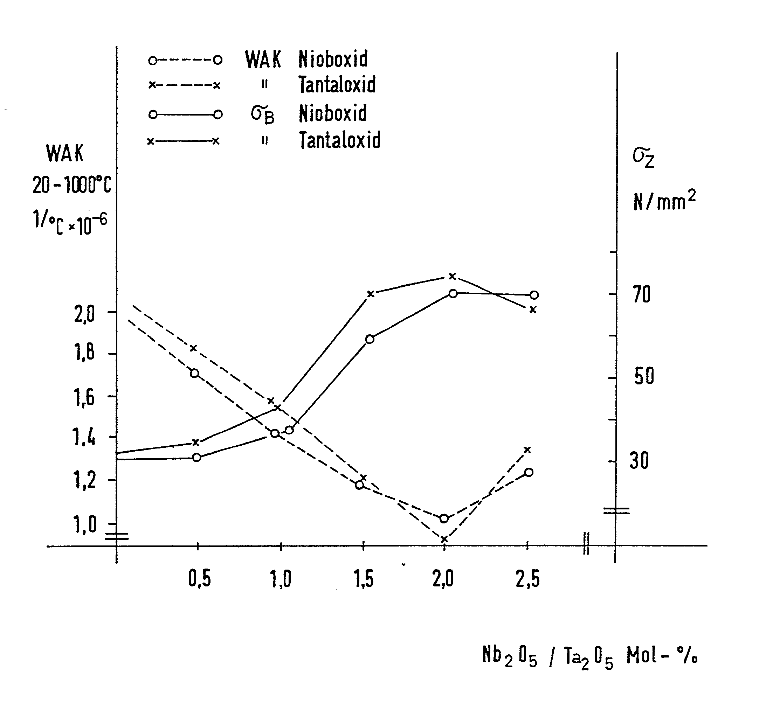

Der Grad der Entglasung ist von der Menge des zugesetzten Niob- und/oder Tantaloxids abhängig. Die Abbildung zeigt die Einflüsse der zugesetzten Mengen an Nioboxid und Tantaloxid auf den Wärmedehnungskoeffizienten und die Zugfestigkeiten. Mit zunehmendem Zusatz an Niob bzw. Tantal sinken zunächst die Wärmedehnungskoeffizienten ab, um bei 6 - 8 % Zusatzmenge ein Minimum bzw. Maximum zu erreichen. Höhere Zusätze lassen die Wärmedehnungskoeffizienten wieder ansteigen. Die Erklärung hierfür ist in einem Auftreten von Magnesiumniobat zu suchen, welches bei Zusatz höherer Mengen entsteht und durch Röntgenphasenanalyse in der cordieritischen Matrix nachgewiesen werden kann. Der Wärmedehnungskoeffizient für polykristallines Magnesiumniobat und Magnesiumtantalat wurde größer als 6 x 10$^{-6}$ 1/$^{\circ}$C (20 - 1000 $^{\circ}$C) bestimmt.

Beispiel 1 (% = Massenanteile in %)

Ein Ansatz aus 39,3 % Speckstein calc., 34,8 Kaolin und/oder Ton und 18,7 % $\alpha$-Aluminiumoxid wird unter Zusatz von 7,2 % Nioboxid in einer in der keramischen Technologie üblichen Naßtrommelmühle während 16 Stunden aufgemahlen und anschließend über einen Zerstäubungstrockner entwässert, das Granulat zu Formteilen statisch trockengepreßt und bei 1400 $^{\circ}$C während 24 Stunden gesintert. Anschließend werden die so erhaltenen Körper während 10 Stunden bei 1300 $^{\circ}$C isotherm getempert. Es resultiert ein Material, das zu über 99 % aus Cordierit besteht und nur noch sehr geringe Mengen an Glasphase ($<$1 %) enthält. Die Wärmedehnung dieses Materials wurde zu 1,0 x 10$^{-6}$ 1/$^{\circ}$C im Bereich von 20 - 1000 $^{\circ}$C bestimmt. Die Zugfestigkeit $\sigma_Z$ beträgt 70 N/mm$^2$ und der E-Modul 5,5 x 10$^4$ N/mm$^2$. Der Wärmeschockkoeffizient $R_1$ beträgt 1270 $^{\circ}$C.

Beispiel 2

Ein Ansatz aus 38,6 % Speckstein calc., 34,4 % Kaolin und 18,4 % $\gamma$-Tonerde wird unter Zusatz von 11,4 % Tantaloxid aufgemahlen, getrocknet, granuliert und isostatisch verpreßt, anschließend bei 1400 $^{\circ}$C während 24 h gebrannt. Die nachfolgende Temperung bei 1200 $^{\circ}$C während 24 h läßt einen 99 %igen Cordieritwerkstoff entstehen mit einer Wärmedehnung von 0,9 x 10$^{-6}$ 1/$^{\circ}$C (20 - 1000 $^{\circ}$C), einer Zugfestigkeit von 74 N/mm$^2$, einem E-Modul von 6 x 10$^4$ N/mm$^2$ und einem Wärmespannungskoeffizient $R_1$ von 1370 $^{\circ}$C.

| Gehalt an | | Zugfestig- keit $\sigma_Z$ | Wärme- dehnungs- koeffi- zient | Wärme- spannungs- koeffi- zient $R_1$ |
|---|---|---|---|---|
| $Nb_2O_5$ (Massenan- teile in %) | $Nb_2O_5$ (Molan- teile in %) | N/mm$^2$ | 1/$^{\circ}$C x 10$^{-6}$ | $^{\circ}$C |
| 0 | 0,0 | 30 | 2,0 | 430 |
| 1,8 | 0,5 | 31 | 1,7 | 460 |
| 3,6 | 1,0 | 36 | 1,4 | 570 |
| 5,4 | 1,5 | 58 | 1,2 | 880 |
| 7,2 | 2,0 | 70 | 1,0 | 1170 |
| 9,0 | 2,5 | 70 | 1,3 | 900 |
| $Ta_2O_5$ (Massenan- teile in %) | $Ta_2O_5$ Molan- teile in %) | | | |
| 0 | 0,0 | 30 | 2,0 | 430 |
| 2,9 | 0,5 | 33 | 1,8 | 460 |
| 5,7 | 1,0 | 42 | 1,6 | 525 |
| 8,6 | 1,5 | 72 | 1,2 | 1000 |
| 11,4 | 2,0 | 74 | 0,9 | 1370 |
| 14,3 | 2,5 | 67 | 1,3 | 940 |

Wie schon die Abbildung verdeutlicht auch die Tabelle in erweiterter Form den Einfluß von Niob- und Tantaloxidzusätzen auf Festigkeit $\sigma_Z$, Wärmedehnung $\alpha$ und Wärmespannungsfaktor $R_1$ von Cordieritkeramik. Mit zunehmenden Zusätzen steigen Festigkeit und Wärmekoeffizient $R_1$ an, die Dehnungskoeffizienten werden kleiner. Bei 1,5 - 2,0 Mol-% an Zusätzen existiert das Maximum für Festigkeit und Wärmespannungskoeffizient und ein Minimum in der Wärmedehnung. Größere Mengen an nunmehr auftretenden Magnesiumniobat und -tantalat verringern Festigkeit und Wärmekoeffizient und erhöhen die Wärmedehnung.

Polykristallines, keramisches Material
aus Cordierit


Patentansprüche


1. Polykristallines, keramisches Material niedriger Wärmedehnung, hoher Festigkeit und hoher Thermoschockbeständigkeit aus Cordierit, dadurch gekennzeichnet, daß das Material keimbildende und damit auf Glasphase rekristallisierend wirkende Zusätze von Nioboxid und/oder Tantaloxid aufweist.


2. Keramisches Material nach Anspruch 1, dadurch gekennzeichnet, daß die Zusätze an Nioboxid und/oder Tantaloxid 0,1 - 15 Massenanteile in % betragen.


3. Keramisches Material nach den Ansprüchen 1 oder 2, dadurch gekennzeichnet, daß das Material eine isotherme Temperung bei 800 - 1300 $^{\circ}$C und eine dadurch bewirkte vollständige Rekristallisation von Cordierit aus der Glasphase erfahren hat.


4. Keramisches Material nach den Ansprüchen 1 - 3, gekennzeichnet durch einen Gehalt von wenigstens 99 % Cordierit und Magnesiumtantalatund/oder Magnesiumniobat als kristalline Phasen.


5. Keramisches Material nach den Ansprüchen 1 - 4, gekennzeichnet durch eine Wärmedehnung von höchstens $1 \times 10^{-6}$ 1/$^{\circ}$C im Bereich von 20 - 1000 $^{\circ}$C.


6. Keramisches Material nach den Ansprüchen 1 - 5, gekennzeichnet durch eine Zugfestigkeit von wenigstens 70 N/mm$^2$ und einen E-Modul von höchstens $6 \times 10^4$ N/mm$^2$.


7. Keramisches Material nach den Ansprüchen 1 - 6, gekennzeichnet durch einen Wärmeschockkoeffizienten $R_1$ von wenigstens 1167 $^{\circ}$C.

WAK Nioboxid
" Tantaloxid
$\sigma_B$ Nioboxid
" Tantaloxid

WAK
$20-1000°C$
$1/°C \times 10^{-6}$

$\sigma_Z$
$N/mm^2$

$Nb_2O_5$ / $Ta_2O_5$ Mol-%

Europäisches
Patentamt

0167649
Nummer der Anmeldung

**EUROPÄISCHER RECHERCHENBERICHT**

EP 84 10 8126

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | CHEMICAL ABSTRACTS, Band 99, Nr. 14, 3. Oktober 1983, Seite 268, Nr. 109696b, Columbus, Ohio, US; & JP - A - 58 79869 (TOYOTA CENTRAL RESEARCH AND DEVELOPMENT LABORATORIES, INC.) 13.05.1983 * Seiten 1,4; Seite 5, Tafel 3 * | 1-7 | C 04 B 35/18 |
| X | CHEMICAL ABSTRACTS, Band 85, Nr. 8, 23. August 1976, Seite 283, Nr. 50969y, Columbus, Ohio, US; & JP - A - 76 37908 (NGK SPARK PLUG CO., LTD.) 30.03.1976 | 1-7 | |
| A | US-A-3 940 255 (R.V. HARRINGTON) * Ansprüche 1-8; Spalte 2, Zeilen 32-68; Spalte 8, Zeilen 3-35 * | 1-7 | RECHERCHIERTE SACHGEBIETE (Int Cl 4) |
| A | FR-A-1 582 814 (INTERNATIONAL PIPE AND CERAMICS CORP.) * Insgesamt * | 1 | C 04 B |
| A | DE-A-2 711 227 (VE WISSENSCHAFTLICH-TECHNISCHER KERAMIK) * Ansprüche 1,2 * | 1 | |

Der vorliegende Recherchenbericht wurde für alle Patentansprüche erstellt.

| Recherchenort DEN HAAG | Abschlußdatum der Recherche 11-03-1985 | Prüfer SCHURMANS H.D.R. |
|---|---|---|